(19) **Europäisches Patentamt / European Patent Office / Office européen des brevets**

(11) **EP 4 585 303 A1**

(12) **EUROPEAN PATENT APPLICATION**
published in accordance with Art. 153(4) EPC

(43) Date of publication:
**16.07.2025 Bulletin 2025/29**

(21) Application number: 23863242.6

(22) Date of filing: 07.09.2023

(51) International Patent Classification (IPC):
**B01J 20/04** (2006.01)    **B01D 53/68** (2006.01)
**B01J 2/00** (2006.01)    **B01J 20/30** (2006.01)
**C01D 3/02** (2006.01)

(52) Cooperative Patent Classification (CPC):
**B01D 53/68; B01J 2/00; B01J 20/04; B01J 20/30; C01D 3/02**

(86) International application number:
**PCT/JP2023/032671**

(87) International publication number:
**WO 2024/053704 (14.03.2024 Gazette 2024/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 09.09.2022 JP 2022143568

(71) Applicant: **Resonac Corporation**
**Tokyo 105-7325 (JP)**

(72) Inventors:
• **KANAUCHI Riku**
  **Tokyo 105-8518 (JP)**
• **FUKUCHI Yohsuke**
  **Tokyo 105-8518 (JP)**
• **KOBAYASHI Hiroshi**
  **Tokyo 105-8518 (JP)**

(74) Representative: **Strehl & Partner mbB**
**Maximilianstrasse 54**
**80538 München (DE)**

(54) **METHOD FOR PRODUCING HYDROGEN FLUORIDE ADSORBENT**

(57)    Provided is a method for producing a hydrogen fluoride adsorbent having a high adsorption capacity of hydrogen fluoride. The method for producing a hydrogen fluoride adsorbent includes: an adsorption step of bringing hydrogen fluoride-containing gas that contains hydrogen fluoride and dilution gas for diluting the hydrogen fluoride and where a concentration of the hydrogen fluoride is 0.5% by volume or more and 60% by volume or less into contact with a metal fluoride such that the hydrogen fluoride in the hydrogen fluoride-containing gas is adsorbed on the metal fluoride and a proportion of the hydrogen fluoride in the metal fluoride on which the hydrogen fluoride is adsorbed is 2% by mass or more and 25% by mass or less; and a desorption step of heating the metal fluoride on which the hydrogen fluoride is adsorbed in the adsorption step in heat treatment atmosphere gas at a temperature of 240°C or lower such that the adsorbed hydrogen fluoride is desorbed from the metal fluoride.

FIG. 1

EP 4 585 303 A1

**Description**

Technical Field

The present invention relates to a method for producing a hydrogen fluoride adsorbent.

Background Art

Gas of a fluorine-containing compound such as fluorine gas, an interhalogen compound, tungsten hexafluoride, silicon tetrafluoride, nitrogen trifluoride, or sulfur tetrafluoride is useful as gas used for manufacturing a semiconductor, but often contains hydrogen fluoride as an impurity.
PTLs 1 and 2 disclose a technology of adsorbing hydrogen fluoride on sodium fluoride to remove impurity from the gas of the fluorine-containing compound for purification.

Citation List

Patent Literatures

   PTL 1: JP 6792158 B
   PTL 2: JP 4843635 B

Summary of Invention

Technical Problem

However, a metal fluoride such as sodium fluoride has a smaller specific surface area than activated carbon that is a general adsorbent, and thus has a problem in that the adsorption capacity of hydrogen fluoride is low.
An object of the present invention is to provide a method for producing a hydrogen fluoride adsorbent having a high adsorption capacity of hydrogen fluoride.

Solution to Problem

To solve the above objects, one aspect of the present invention is as the following [1] to [6].

   [1] A method for producing a hydrogen fluoride adsorbent, the method including:

      an adsorption step of bringing hydrogen fluoride-containing gas that contains hydrogen fluoride and dilution gas for diluting the hydrogen fluoride, in which a concentration of the hydrogen fluoride is 0.5% by volume or more and 60% by volume or less into contact with a metal fluoride such that the hydrogen fluoride in the hydrogen fluoride-containing gas is adsorbed on the metal fluoride and a proportion of the hydrogen fluoride in the metal fluoride on which the hydrogen fluoride is adsorbed is 2% by mass or more and 25% by mass or less; and
      a desorption step of heating the metal fluoride on which the hydrogen fluoride is adsorbed in the adsorption step in heat treatment atmosphere gas at a temperature of 240°C or lower such that the adsorbed hydrogen fluoride is desorbed from the metal fluoride.

   [2] The method for producing a hydrogen fluoride adsorbent according to [1], in which the dilution gas is at least one gas selected from nitrogen gas, oxygen gas, carbon dioxide, helium, argon, methane tetrafluoride, fluorine gas, chlorine monofluoride, chlorine trifluoride, chlorine pentafluoride, bromine trifluoride, bromine pentafluoride, bromine heptafluoride, iodine trifluoride, iodine pentafluoride, iodine heptafluoride, tungsten hexafluoride, silicon tetrafluoride, nitrogen trifluoride, and sulfur tetrafluoride.
   [3] The method for producing a hydrogen fluoride adsorbent according to [1] or [2], in which the adsorption step is performed at 0°C or higher and 140°C or lower.
   [4] The method for producing a hydrogen fluoride adsorbent according to any one of [1] to [3], in which the heat treatment atmosphere gas is at least one of nitrogen gas, helium, argon, oxygen gas, and air.
   [5] The method for producing a hydrogen fluoride adsorbent according to any one of [1] to [4], in which in the desorption step, the adsorbed hydrogen fluoride is desorbed from the metal fluoride on which the hydrogen fluoride is adsorbed while controlling a rate at which the hydrogen fluoride is desorbed from the metal fluoride on which the hydrogen fluoride is adsorbed to be 3 mg/min or slower per 1 g of the metal fluoride.

[6] The method for producing a hydrogen fluoride adsorbent according to any one of [1] to [5], in which the metal fluoride on which the hydrogen fluoride is adsorbed in the adsorption step is obtained by tableting and molding powder of sodium fluoride or by tableting and molding powder of sodium hydrogen fluoride, heating tableted and molded product, and causing a reaction of changing the sodium hydrogen fluoride into sodium fluoride to occur along with desorption of hydrogen fluoride.

Advantageous Effects of Invention

According to the present invention, a hydrogen fluoride adsorbent having a high adsorption capacity of hydrogen fluoride can be obtained.

Brief Description of Drawings

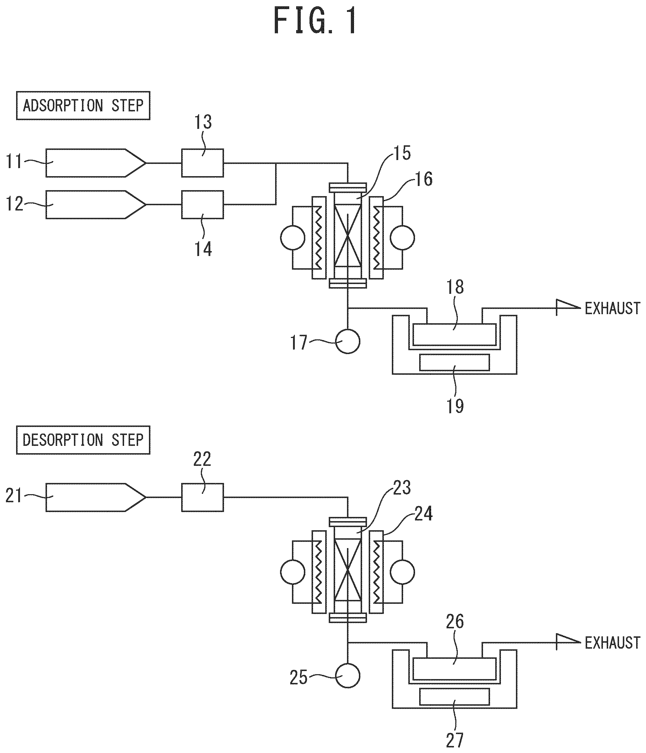

FIG. 1 is a schematic view of an example of a hydrogen fluoride adsorbent production device illustrating one embodiment of a method for producing a hydrogen fluoride adsorbent according to the present invention.

Description of Embodiments

Embodiments of the present invention will now be described. The embodiments are merely examples of the present invention, and the present invention is not limited to the embodiments. Various modifications or improvements can be made in the embodiments, and such modifications and improvements can be encompassed by the present invention.

A method for producing a hydrogen fluoride adsorbent according to the present embodiment includes: an adsorption step of adsorbing hydrogen fluoride (HF) on a metal fluoride such as sodium fluoride (NaF); and a desorption step of desorbing the hydrogen fluoride adsorbed in the adsorption step from the metal fluoride.

Specifically, the adsorption step is a step of bringing hydrogen fluoride-containing gas that is gas containing hydrogen fluoride into contact with a metal fluoride such that the hydrogen fluoride in the hydrogen fluoride-containing gas is adsorbed on the metal fluoride. The hydrogen fluoride-containing gas contains hydrogen fluoride and dilution gas that is gas for diluting the hydrogen fluoride, and a concentration of the hydrogen fluoride in the hydrogen fluoride-containing gas is 0.5% by volume or more and 60% by volume or less.

In the adsorption step, the hydrogen fluoride is adsorbed on the metal fluoride such that a proportion of the hydrogen fluoride in the metal fluoride on which the hydrogen fluoride is adsorbed is 2% by mass or more and 25% by mass or less.

In addition, the desorption step is a step of heating the metal fluoride on which the hydrogen fluoride is adsorbed in the adsorption step in heat treatment atmosphere gas at a temperature of 240°C or lower such that the adsorbed hydrogen fluoride is desorbed from the metal fluoride.

With the method for producing a hydrogen fluoride adsorbent according to the present embodiment, a hydrogen fluoride adsorbent having a high adsorption capacity of hydrogen fluoride can be obtained. That is, the metal fluoride on which the treatment including the adsorption step and the desorption step is performed has excellent performance of adsorbing hydrogen fluoride and has a high adsorption capacity of hydrogen fluoride. Therefore, the metal fluoride can be suitably used as a hydrogen fluoride adsorbent.

By using the hydrogen fluoride adsorbent, hydrogen fluoride can be removed from gas containing hydrogen fluoride for purification, and purified gas where the concentration of hydrogen fluoride is reduced can be produced. Hereinafter, the gas that is a target from which hydrogen fluoride is to be removed by the hydrogen fluoride adsorbent will also be referred to as hydrogen fluoride removal target gas.

When the adsorption capacity of the hydrogen fluoride adsorbent is insufficient, in a case where the hydrogen fluoride concentration in the hydrogen fluoride removal target gas is high, hydrogen fluoride cannot be sufficiently adsorbed, and there is a concern that purified gas in which the concentration of hydrogen fluoride is low cannot be produced. For example, when a particulate obtained by tableting and molding powder of a metal fluoride such as sodium fluoride in a granular shape is used as a hydrogen fluoride adsorbent as it is without performing the treatment including the adsorption step and the desorption step, the specific surface area is small (0.3 $m^2$/g or less when measured using a mercury press-in method capable of measuring mesopores to macropores), and thus the adsorption capacity is insufficient. In addition, there is a concern that powdering or joining of the hydrogen fluoride adsorbent (the above-described particulate obtained by tableting and molding the powder in a granular shape) is likely to occur. When the powdering of the hydrogen fluoride adsorbent occurs, clogging occurs such that the gas flow channel is narrowed. Therefore, for example, a filled cylinder filled with the hydrogen fluoride adsorbent may be blocked.

However, in the hydrogen fluoride adsorbent produced using the method for producing a hydrogen fluoride adsorbent according to the present embodiment, by performing the treatment including the adsorption step and the desorption step thereon, the specific surface area is large, and thus the adsorption capacity of the hydrogen fluoride adsorbent is high. Accordingly, by using the hydrogen fluoride adsorbent produced using the method for producing a hydrogen fluoride adsorbent according to the present embodiment, even when the hydrogen fluoride concentration in the hydrogen fluoride removal target gas is high, hydrogen fluoride can be sufficiently adsorbed, and purified gas in which the concentration of hydrogen fluoride is low can be produced. Further, in the hydrogen fluoride adsorbent produced using the method for producing a hydrogen fluoride adsorbent according to the present embodiment, powdering or joining is not likely to occur.

In addition, even when hydrogen fluoride is adsorbed to decrease the adsorption performance, the hydrogen fluoride adsorbent produced using the method for producing a hydrogen fluoride adsorbent according to the present embodiment is regenerated by desorbing the adsorbed hydrogen fluoride, and can be repeatedly used as a hydrogen fluoride adsorbent having excellent adsorption performance. A decrease in adsorption capacity caused by the regeneration is not likely to occur, and thus the adsorption capacity of the regenerated hydrogen fluoride adsorbent is also high.

Hereinafter, the method for producing a hydrogen fluoride adsorbent according to the present embodiment will be described in more detail.

As a result of thorough investigation, the present inventors found a treatment of increasing the specific surface area of a metal fluoride such as sodium fluoride to improve the adsorption capacity, thereby completing the present invention. The details will be described below.

The crystal density of sodium fluoride is 2.79 mL/g (numerical value at 20°C). On the other hand, the apparent density (value obtained by dividing the mass of one pellet by the geometric volume) of one commercially available sodium fluoride particulate (hereinafter, also referred to as "sodium fluoride pellet") on which the treatment including the adsorption step and the desorption step is not performed (hereinafter, the treatment including the adsorption step and the desorption step not being performed will also be referred to as "non-treated") is 1.8 to 2.3 mL/g. Accordingly, when the crystal density and the apparent density of the non-treated sodium fluoride pellet are compared to each other, the pellet of the non-treated sodium fluoride includes 17 to 35% of pores of the geometric volume with respect to the crystal structure in the densest state.

However, the pore volume required for a mercury press-in method is only a value of 7 to 20% of the geometric volume. Therefore, it is considered that the pores in the non-treated sodium fluoride pellet are present as pores having a void shape not appearing on the surface (which refers to a space in an isolated state where there is no connection to the surface of the pellet), and the space not contributing to adsorption is present in the geometric volume of the non-treated sodium fluoride pellet. Accordingly, it is considered that, when the voids present in the geometric volume of the pellet can communicate with the surface of the pellet, the specific surface area of the sodium fluoride pellet significantly increases.

As a result of investigating the method of increasing the specific surface area of the sodium fluoride pellet, the present inventors found that, by adsorbing hydrogen fluoride to the sodium fluoride pellet and subsequently desorbing the adsorbed hydrogen fluoride, fine pores having an opening diameter of 0.1 $\mu$m or more and 10 $\mu$m or less are newly formed on the surface to increase the specific surface area of the sodium fluoride pellet. Hereinafter, an estimation mechanism of increasing the specific surface area of the sodium fluoride pellet by the adsorption and desorption of hydrogen fluoride will be described.

First, the present inventors thought that the adsorption phenomenon of hydrogen fluoride on sodium fluoride does not occur only when hydrogen fluoride is simply adsorbed on the surface of sodium fluoride. That is, the present inventors thought that sodium fluoride and hydrogen fluoride are bonded through a hydrogen bond to form a salt (hereinafter, also referred to as a NaF-HF salt) and the mixing of sodium fluoride and hydrogen fluoride with a free composition relates to the adsorption phenomenon of hydrogen fluoride.

Hydrogen fluoride is adsorbed on the surface of the sodium fluoride pellet. In this case, however, a phenomenon in which hydrogen fluoride penetrates into the sodium fluoride pellet without remaining on the surface of the sodium fluoride pellet also occurs, and sodium fluoride and hydrogen fluoride in the sodium fluoride pellet form a composition (NaF-HF salt) with a free composition ratio.

The present inventors expected that, in the sodium fluoride pellet on which hydrogen fluoride is adsorbed as described above, the concentration of hydrogen fluoride in the vicinity of the surface is high and decreases toward the center portion. It is considered that, since the above-described adsorption occurs, hydrogen fluoride is present not only on the surface of the sodium fluoride pellet but also in the sodium fluoride pellet.

On the other hand, the phenomenon in which hydrogen fluoride is desorbed from the sodium fluoride pellet is a phenomenon in which the sodium fluoride pellet is heated such that hydrogen fluoride radiates as gas from the surface of the sodium fluoride pellet. It is considered that hydrogen fluoride present in a location close to the surface of the sodium fluoride pellet is vaporized, and hydrogen fluoride present in the sodium fluoride pellet moves toward the surface of the sodium fluoride pellet. Therefore, it is considered that hydrogen fluoride present in the sodium fluoride pellet is vaporized later than hydrogen fluoride present in the location close to the surface.

At this time, when voids are present in the sodium fluoride pellet, hydrogen fluoride present in the sodium fluoride pellet may also be vaporized in the voids. As a result, the pressure in the voids is increased by the vaporized hydrogen fluoride. Therefore, hydrogen fluoride may penetrate a weak structure in the sodium fluoride pellet to be exhausted to the outside of the sodium fluoride pellet. The present inventors presumed that, by controlling these phenomena, a sodium fluoride pellet having an increased specific surface area and a high adsorption capacity can be produced.

[Adsorption Step]

The adsorption step is a step of bringing hydrogen fluoride-containing gas that contains hydrogen fluoride and dilution gas for diluting the hydrogen fluoride, in which a concentration of the hydrogen fluoride is 0.5% by volume or more and 60% by volume or less into contact with a metal fluoride such that the hydrogen fluoride in the hydrogen fluoride-containing gas is adsorbed on the metal fluoride and a proportion of the hydrogen fluoride in the metal fluoride on which the hydrogen fluoride is adsorbed is 2% by mass or more and 25% by mass or less.

The method of bringing the hydrogen fluoride-containing gas into contact with the metal fluoride is not particularly limited, and examples thereof include a method of causing the hydrogen fluoride-containing gas to flow in a container filled with the metal fluoride. The shape of the container is not particularly limited, and examples thereof include a cylindrical shape and a box shape.

The material of the container is not particularly limited as long as it has corrosion resistance to hydrogen fluoride. Note that, in consideration the fact that the container may be used in a purification step of causing gas of a fluorine-containing compound that is the hydrogen fluoride removal target gas to flow to remove hydrogen fluoride that is an impurity from the gas of the fluorine-containing compound, it is preferable to use a material having not only corrosion resistance to hydrogen fluoride but also corrosion resistance to the fluorine-containing compound.

Examples of the fluorine-containing compound include fluorine gas ($F_2$), an interhalogen compound, tungsten hexafluoride ($WF_6$), silicon tetrafluoride ($SiF_4$), nitrogen trifluoride ($NF_3$), and sulfur tetrafluoride ($SF_4$). In addition, examples of the interhalogen compound include chlorine monofluoride (ClF), chlorine trifluoride ($ClF_3$), chlorine penta-fluoride ($ClF_5$), bromine trifluoride ($BrF_3$), bromine pentafluoride ($BrF_5$), bromine heptafluoride ($BrF_7$), iodine trifluoride ($IF_3$), iodine pentafluoride ($IF_5$), and iodine heptafluoride ($IF_7$). The fluorine-containing compound may be used alone or in combination of two or more kinds thereof.

Examples of the materials having corrosion resistance to hydrogen fluoride and corrosion resistance to the fluorine-containing compound include a metal material such as nickel (Ni), Hastelloy (registered trademark), Monel (registered trademark), stainless steel, copper (Cu), or soft steel.

When the shape of the container is a cylindrical shape, the diameter thereof is not particularly limited. For example, when a particulate of the metal fluoride is filled in the container, the diameter is preferably a diameter where 10 or more particulates of the metal fluoride can be arranged in the radial direction, more preferably a diameter where 20 or more of particulates can be arranged, and still more preferably a diameter where 40 or more of particulates can be arranged.

When the diameter of the cylindrical container is a diameter where 10 or more particulates of the metal fluoride can be arranged in the radial direction, the proportion of the hydrogen fluoride-containing gas flowing through the vicinity of the inner surface of the cylindrical container decreases, and the proportion of the hydrogen fluoride-containing gas in contact with the particulates of the metal fluoride increases. As a result, hydrogen fluoride is likely to be adsorbed on the particulate of the metal fluoride, and thus hydrogen fluoride exhausted from the container is likely to be reduced without being adsorbed on the particulate of the metal fluoride.

When the particulate of the metal fluoride is filled in the cylindrical container, the filling height of the particulate of the metal fluoride (the length of the cylindrical container in the central axis direction) is not particularly limited, and may be the same as the diameter of the cylindrical container or may be several times to several tens of times the diameter of the cylindrical container.

The proportion of hydrogen fluoride in the metal fluoride on which hydrogen fluoride is adsorbed needs to be 2% by mass or more and 25% by mass or less and is preferably 2% by mass or more and 15% by mass or less and more preferably 5% by mass or more and 10% by mass or less. When the proportion of hydrogen fluoride in the metal fluoride on which hydrogen fluoride is adsorbed is 2% by mass or more and 25% by mass or less, the adsorption capacity of hydrogen fluoride in the metal fluoride increases.

In addition, powdering of the metal fluoride or joining of the metal fluoride particles may occur due to the adsorption of hydrogen fluoride. However, when the proportion of hydrogen fluoride in the metal fluoride on which hydrogen fluoride is adsorbed is 2% by mass or more and 15% by mass or less, a phenomenon where a contact portion between the metal fluoride particles melts such that the metal fluoride particles are joined is not likely to occur.

In the desorption step described below in detail, through-holes that communicate with the surface through the voids in the metal fluoride are formed. When the proportion of hydrogen fluoride in the metal fluoride on which hydrogen fluoride is adsorbed is 2% by mass or more and 25% by mass or less, the number of the through-holes to be formed can be made appropriate. That is, the metal fluoride on which the treatment including the adsorption step and the desorption step is performed is not likely to be brittle.

The proportion of hydrogen fluoride in the metal fluoride on which hydrogen fluoride is adsorbed in the adsorption step can be controlled based on the amount of hydrogen fluoride supplied to come into contact with metal fluoride and the amount of hydrogen fluoride passed through the metal fluoride without being adsorbed on the metal fluoride. When the flow rate of the hydrogen fluoride-containing gas is measured using a flow meter and the concentration of hydrogen fluoride in the hydrogen fluoride-containing gas is measured using, for example, a Fourier transform infrared spectrophotometer (FT-IR), the amount of hydrogen fluoride supplied to come into contact with metal fluoride and the amount of hydrogen fluoride passed through the metal fluoride without being adsorbed on the metal fluoride can be measured. The absorption wavelength of hydrogen fluoride in the infrared spectroscopy is 4038 cm$^{-1}$.

The description will be made using an example. Hydrogen fluoride-containing gas in which the concentration of hydrogen fluoride is 10% by volume is supplied at a flow rate of 100 NmL/min to a cylindrical container filled with 50 g of the non-treated sodium fluoride particulate. The hydrogen fluoride-containing gas is mixed gas of nitrogen gas (dilution gas) at a flow rate of 90 NmL/min and hydrogen fluoride at a flow rate of 10 NmL/min.

When the entire amount of outlet gas exhausted from an exhaust port of the cylindrical container is analyzed by a Fourier transform infrared spectrophotometer, a peak of 4038 cm$^{-1}$ derived from hydrogen fluoride is detected 120 minutes after starting the supply of the hydrogen fluoride-containing gas. Next, the hydrogen fluoride-containing gas is continuously supplied to the cylindrical container, and the supply of the hydrogen fluoride-containing gas is stopped 300 minutes after starting the supply of the hydrogen fluoride-containing gas. The supply amount of hydrogen fluoride supplied to the non-treated sodium fluoride particulate is 3000 NmL, and the volume is 2.68 g in terms of the mass.

In addition, the amount of hydrogen fluoride that is not adsorbed on the non-treated sodium fluoride particulate is the amount of hydrogen fluoride exhausted from the exhaust port of the cylindrical container in a period of 120 minutes to 300 minutes after starting the supply of the hydrogen fluoride-containing gas. When peaks of hydrogen fluoride during the analysis of the Fourier transform infrared spectrophotometer are integrated to obtain the mass of hydrogen fluoride, the mass of hydrogen fluoride is 0.21 g.

Accordingly, the amount of hydrogen fluoride adsorbed on the non-treated sodium fluoride particulate is 2.47 g, and the proportion of hydrogen fluoride in the sodium fluoride particulate on which hydrogen fluoride is adsorbed is 4.7% by mass.

This way, the proportion of hydrogen fluoride in the sodium fluoride particulate on which hydrogen fluoride is adsorbed in the adsorption step can be controlled based on the amount of hydrogen fluoride supplied to come into contact with the sodium fluoride particulate and the amount of hydrogen fluoride passed through the metal fluoride without being adsorbed on the sodium fluoride particulate.

The adsorption step is performed preferably at 0°C or higher and 140°C or lower, more preferably at 10°C or higher and 120°C or lower, and still more preferably at 20°C or higher and 100°C or lower. When the adsorption of hydrogen fluoride is performed at a temperature in the above-described numerical range, the metal fluoride does not need to be cooled during the adsorption of hydrogen fluoride, which is economical.

In addition, when the hydrogen fluoride-containing gas flows in the container filled with the metal fluoride, in a case where the temperature of the metal fluoride is low, a larger amount of hydrogen fluoride is adsorbed on the surface of the metal fluoride disposed in a portion of the container close to an inlet port of the hydrogen fluoride-containing gas. Therefore, the phenomenon where the contact portion between the metal fluoride particles melts such that the metal fluoride particles are joined is likely to occur. However, when the adsorption of hydrogen fluoride is performed at a temperature in the above-described numerical range, the above-described phenomenon where the contact portion between the metal fluoride particles melts such that the metal fluoride particles are joined is not likely to occur.

Further, when the adsorption of hydrogen fluoride is performed at a temperature in the above-described numerical range, a phenomenon in which hydrogen fluoride passes through the metal fluoride without being adsorbed on the metal fluoride is not likely to occur. Therefore, the amount of hydrogen fluoride adsorbed on the metal fluoride is likely to increase.

The space velocity (hereinafter, also referred to as SV") of the hydrogen fluoride-containing gas supplied to the metal fluoride in the adsorption step is not particularly limited and is preferably 10 /h or more and 1000 /h or less, more preferably 50 /h or more and 600 /h or less, and still more preferably 100 /h or more and 400 /h or less.

When the SV of the hydrogen fluoride-containing gas supplied to the metal fluoride in the adsorption step is within the above-described numerical range, a difference between the amount of hydrogen fluoride that is adsorbed on the metal fluoride disposed in a portion of the container filled with the metal fluoride that is close to the inlet port of the hydrogen fluoride-containing gas and the amount of hydrogen fluoride that is adsorbed on the metal fluoride disposed in a portion of the container filled with the metal fluoride that is close to the exhaust port of the hydrogen fluoride-containing gas is not likely to be large.

In addition, when the SV of the hydrogen fluoride-containing gas supplied to the metal fluoride in the adsorption step is within the above-described numerical range, pressure loss of gas in the container filled with the metal fluoride is not likely to increase. Accordingly, a high pressure acts on the metal fluoride in the container. Therefore, the pressure of the hydrogen fluoride-containing gas to be supplied does not need to be increased, which is economical.

The pressure condition in the adsorption step is not particularly limited and is preferably the normal pressure or a pressure around the normal pressure. When the pressure increases, a retention time for which the hydrogen fluoride-containing gas remains in the container filled with the metal fluoride increases, and the SV decreases. Therefore, it is preferable that the pressure is adjusted such that the SV is in the above-described numerical range.

[Metal Fluoride]

The kind of the metal fluoride is not particularly limited, and examples thereof include lithium fluoride (LiF), sodium fluoride (NaF), potassium fluoride (KF), rubidium fluoride (RbF), cesium fluoride (CsF), magnesium fluoride ($MgF_2$), calcium fluoride ($CaF_2$), and barium fluoride ($BaF_2$). Among these, sodium fluoride or potassium fluoride is preferable, and sodium fluoride is more preferable. The metal fluoride may be used alone or in combination of two or more kinds thereof.
Examples of a metal fluoride that is useful other than sodium fluoride include potassium fluoride. When potassium fluoride and hydrogen fluoride react with each other, potassium fluoride and hydrogen fluoride are bonded through a hydrogen bond to form a salt (hereinafter, also referred to as a KF-nHF salt). The state diagram of the KF-nHF salt is widely known, and it is presumed from the state diagram that potassium fluoride has the same hydrogen fluoride adsorption capacity as that of sodium fluoride.

[Non-treated Metal Fluoride]

The shape of the non-treated metal fluoride is not particularly limited, and examples thereof include a powder shape, a granular shape, a rod shape, a thread shape, a needle shape, a block shape, and a plate shape. The shape of the particulate of the non-treated metal fluoride is not particularly limited, and examples thereof include a columnar shape, a spherical shape, an oval shape, and a plate shape.
When the shape of the non-treated metal fluoride is a powder shape, the average particle size thereof is preferably less than 50 $\mu$m. In addition, when the shape of the non-treated metal fluoride is a granular shape, the average particle size thereof is preferably 50 $\mu$m or more and 10 mm or less. As the method of measuring the average particle size include a sieving method using a screen or a precipitation method can be used.
By performing the treatment including the adsorption step and the desorption step, fine pores having an opening diameter of 0.1 $\mu$m or more and 10 $\mu$m or less are newly formed on the surface, the specific surface area of the metal fluoride increases, and the adsorption capacity of the metal fluoride increases. It is presumed that, when the average particle size is 0.5 $\mu$m or more, the effect of increasing the adsorption capacity is exhibited irrespective of whether the shape of the non-treated metal fluoride is a powder shape or a granular shape.
Note that, from the viewpoint of preventing blockage of a pipe or the like in a device that performs the treatment including the adsorption step and the desorption step, it is preferable that the shape of the non-treated metal fluoride is a granular shape. When the shape of the non-treated metal fluoride is a granular shape, the size of the particulate of the non-treated metal fluoride is not particularly limited. For example, when the shape of the particulate of the non-treated metal fluoride is a pillar shape, the diameter thereof may be 2 mm or more and 10 mm or less (preferably 1 mm or more and 10 mm or less), and the height may be 2 mm or more and 10 mm or less.
In addition, as the particulate of the non-treated metal fluoride on which hydrogen fluoride is adsorbed in the adsorption step, a commercially available product (for example, a sodium fluoride pellet manufactured by Morita Chemical Industries Co., Ltd.) may be used, a product obtained by tableting and molding powder of a metal fluoride such as sodium fluoride may be used, or a product obtained by tableting and molding powder of a metal fluoride such as sodium fluoride and calcining the molded product may be used.
Further, when sodium hydrogen fluoride ($NaHF_2$) is heated, a reaction of desorbing hydrogen fluoride to form sodium fluoride occurs. Accordingly, the non-treated sodium fluoride particulate may be prepared by tableting and molding powder of sodium hydrogen fluoride, tableted and molded product at a temperature of, for example, 100°C or higher and 600°C or lower, and causing a reaction of changing the sodium hydrogen fluoride into sodium fluoride along to occur with desorption of hydrogen fluoride.
The apparent density of the non-treated sodium fluoride particulate (value obtained by dividing the mass of one sodium fluoride particulate by the geometric volume) is preferably 1.8 mL/g or more and 2.3 mL/g or less. When the apparent density is in the above-described numerical range, the crushing strength is high, powdering is not likely to occur, and a high tableting pressure at which the powder of sodium fluoride is tableted and molded is not required. Therefore, the productivity of the sodium fluoride particulate is high. The crushing strength of the sodium fluoride particulate correlates to the apparent density, and a sodium fluoride particulate having a high apparent density also has a high crushing strength.

[Dilution Gas]

The kind of the dilution gas for diluting hydrogen fluoride is not particularly limited as long as it does not react with sodium fluoride. For example, at least one gas selected from nitrogen gas ($N_2$), oxygen gas ($O_2$), carbon dioxide ($CO_2$), helium (He), argon (Ar), methane tetrafluoride ($CF_4$), fluorine gas, chlorine monofluoride, chlorine trifluoride, chlorine pentafluoride, bromine trifluoride, bromine pentafluoride, bromine heptafluoride, iodine trifluoride, iodine pentafluoride, iodine heptafluoride, tungsten hexafluoride, silicon tetrafluoride, nitrogen trifluoride, and sulfur tetrafluoride can be used. The dilution gas may be used alone or in combination of two or more kinds thereof.

[Hydrogen Fluoride-Containing Gas]

The hydrogen fluoride-containing gas containing hydrogen fluoride and the dilution gas can be produced, for example, by mixing hydrogen fluoride supplied from a hydrogen fluoride storage container that stores hydrogen fluoride and the dilution gas supplied from a dilution gas storage container that stores the dilution gas. In addition, when the dilution gas is gas of the fluorine-containing compound such as fluorine gas or chlorine monofluoride, hydrogen fluoride by-produced during the production of the fluorine-containing compound is contained as impurity in the gas of the fluorine-containing compound. Accordingly, the gas of the fluorine-containing compound containing the hydrogen fluoride as impurity may be the hydrogen fluoride-containing gas.

The concentration of hydrogen fluoride in the hydrogen fluoride-containing gas needs to be 0.5% by volume or more and 60% by volume or less and is preferably 0.5% by volume or more and 20% by volume or less, more preferably 2% by volume or more and 15% by volume or less, and still more preferably 5% by volume or more and 10% by volume or less.

When the concentration of hydrogen fluoride in the hydrogen fluoride-containing gas is 0.5% by volume or more and 60% by volume or less, the period of time required to adsorb hydrogen fluoride on the metal fluoride is reduced.

In addition, when the concentration of the hydrogen fluoride in the hydrogen fluoride-containing gas is 0.5% by volume or more and 20% by volume or less, the phenomenon where the contact portion between the metal fluoride particles melts such that the metal fluoride particles are joined is not likely to occur. Therefore, the passage of gas is not likely to be hindered, and pressure loss of gas is not likely to increase. A case where the metal fluoride is sodium fluoride will be described as an example. The melting point of the NaF-HF salt formed on the surface of the sodium fluoride particulate tends to decrease as the ratio of hydrogen fluoride to sodium fluoride in the NaF-HF salt increases. When the concentration of hydrogen fluoride in the hydrogen fluoride-containing gas is 0.5% by volume or more and 20% by volume or less, the melting point of the NaF-HF salt does not excessively decrease. Accordingly, a phenomenon where the contact portion between the sodium fluoride particulates melts such that the sodium fluoride particulates are joined is not likely to occur. Therefore, the passage of gas is not likely to be hindered, and pressure loss of gas is not likely to increase.

Before subjecting the metal fluoride to the adsorption step, a pre-heating step of heating the metal fluoride while causing only inert gas such as nitrogen gas to flow does not need to be performed. That is, in the method for producing a hydrogen fluoride adsorbent according to the present embodiment, the pre-heating step of heating the metal fluoride while causing only the inert gas to flow may or may not be performed before subjecting the metal fluoride to the adsorption step.

[Desorption Step]

The desorption step is a step of heating the metal fluoride on which the hydrogen fluoride is adsorbed in the adsorption step in heat treatment atmosphere gas at a temperature of 240°C or lower such that the adsorbed hydrogen fluoride is desorbed from the metal fluoride. The temperature of the desorption step needs to be 240°C or lower and is preferably 230°C or lower, more preferably 220°C or lower, and still more preferably 200°C or lower. When the temperature of the desorption step is 230°C or lower, the powdering of the metal fluoride is not likely to occur. When the temperature of the metal fluoride reaches about 100°C, the adsorbed hydrogen fluoride starts to be vaporized. Therefore, the temperature of the desorption step is preferably 100°C or higher, more preferably 120°C or higher, and still more preferably 140°C or higher.

The kind of the heat treatment atmosphere gas used in the desorption step is not particularly limited, and harmless gas is preferably used. Specifically, at least one of nitrogen gas, helium, argon, oxygen gas, air, and carbon dioxide is preferably used. The heat treatment atmosphere gas may be used alone or in combination of two or more kinds thereof.

It is preferable that the amount of impurity in the heat treatment atmosphere gas is small. For example, when the impurity is water, the concentration thereof is preferably 0.05% by volume or less and more preferably 0.01% by volume or less. When both hydrogen fluoride and water are present, an acid aqueous solution that corrodes metal is formed. Therefore, there is a concern that the corrosion of a container filled with the metal fluoride may be promoted.

The desorption step may be performed in the container where the adsorption step is performed or may be performed after moving the metal fluoride on which the adsorption step is performed to another container. It is preferable that the desorption step is performed in the container where the adsorption step is performed because the metal fluoride does not need to be moved. When the desorption step is performed in the container where the adsorption step is performed, the treatment can be shifted from the adsorption step to the desorption step by stopping the supply of the hydrogen fluoride-containing gas to the container and subsequently heating the container to increase the temperature with means such as external heating while supplying inert gas such as nitrogen gas.

The temperature increase rate in the desorption step is not particularly limited. It is preferable to increase the temperature such that the desorption rate (or the vaporization rate of hydrogen fluoride) at which the hydrogen fluoride adsorbed on the metal fluoride is vaporized into gas hydrogen fluoride and desorbed from the metal fluoride is 10 mg/min or slower per 1 g of the metal fluoride on which hydrogen fluoride is adsorbed, and it is more preferable to increase the temperature such that the desorption rate is 3 mg/min or slower.

A case where the metal fluoride is sodium fluoride will be described as an example. The vapor pressure of hydrogen fluoride varies depending on the hydrogen fluoride concentration in the NaF-HF salt formed on the surface of the sodium fluoride particulate. However, with the adsorption amount of hydrogen fluoride in the present invention, the vapor pressure substantially refers to a vapor pressure represented by Formula (1) below.

$$\log P \ (mmHg) \ = \ -2540/T(K) \ + \ 7.25 \ \cdots \ Formula \ (1)$$

In Formula (1), P represents the vapor pressure (absolute pressure) of hydrogen fluoride, and the unit is millimeter of mercury (mmHg). In addition, in Formula (1), T represents the temperature, and the unit represents the absolute temperature (K).

The vapor pressure of hydrogen fluoride calculated from Formula (1) is substantially a value when the 15% by mass of hydrogen fluoride is adsorbed on the sodium fluoride particulate. Therefore, when the adsorption amount of hydrogen fluoride is small, the vapor pressure is lower than this value.

In addition, the temperature range to which Formula (1) is applicable is 100°C or higher and 200°C or lower, and when the temperature range exceeds 200°C, the actual vapor pressure of hydrogen fluoride is higher than the value calculated from Formula (1). When the temperature range exceeds 200°C, it is preferable to use Formula (2) below.

$$\log P \ (mmHg) \ = \ -3300/T(K) \ + \ 8.96 \ \cdots \ Formula \ (2)$$

In the desorption step, the evaporation rate of hydrogen fluoride at which the adsorbed hydrogen fluoride is evaporated from the sodium fluoride particulate is preferably 10 mg/min or slower per 1 g of the sodium fluoride particulate on which hydrogen fluoride is adsorbed. The evaporation rate of hydrogen fluoride from the sodium fluoride particulate is very fast, and when the concentration of hydrogen fluoride in the gas phase portion reaches an equilibrium concentration of hydrogen fluoride calculated from the partial pressure obtained from Formula (1), the concentration is not the equilibrium concentration or more. Accordingly, the evaporation rate of hydrogen fluoride can be controlled based on the supply rate of the heat treatment atmosphere gas.

For example, when the temperature of the desorption step is 200°C (473 K), the vapor pressure P of hydrogen fluoride calculated in Formula (1) is 76 mmHg. Assuming that the desorption step is performed at the atmospheric pressure (760 mmHg), 76/760 = 0.1, and the concentration of hydrogen fluoride in the gas phase portion is about 10.0% by volume which reaches the equilibrium concentration.

Assuming that the heat treatment atmosphere gas is supplied to the container at a flow rate of 1 NL/min in the desorption step at 200°C, the evaporation rate of hydrogen fluoride is substantially 0.1 NL/min, and the evaporation rate is substantially 89 mg/min in terms of the mass. It was clarified that, when the mass of the sodium fluoride particulate filled in the container is 100 g, the evaporation rate of hydrogen fluoride is adjusted to be 0.336 NL/min or slower by supplying the heat treatment atmosphere gas to the container at a flow rate of 3.36 NL/min or slower, and the evaporation rate of hydrogen fluoride is 300 mg/min or slower in terms of the mass. That is, assuming that the heat treatment atmosphere gas is supplied to the container at a flow rate of 3.36 NL/min or slower per 100 g of the mass of the sodium fluoride particulate filled in the container, the evaporation rate of hydrogen fluoride per 1 g of the sodium fluoride particulate on which hydrogen fluoride is adsorbed can be adjusted to be 3 mg/min (= 300 (mg/min)/100 (g)) or slower.

Likewise, when the mass of the metal fluoride filled in the container and the temperature of the desorption step are determined, the flow rate of the heat treatment atmosphere gas to be supplied can be calculated. Therefore, the evaporation rate of hydrogen fluoride can be controlled to be 3 mg/min or slower per 1 g of the metal fluoride on which hydrogen fluoride is adsorbed.

In the desorption step, the degree to which hydrogen fluoride is desorbed from the metal fluoride is not particularly limited. However, it is preferable that the desorption step is performed until the proportion of hydrogen fluoride in the metal fluoride is 0.001% by mass or more and 1% by mass or less, it is more preferable that the desorption step is performed until the proportion of hydrogen fluoride in the metal fluoride is 0.001% by mass or more and 0.5% by mass or less, and it is still more preferable that the desorption step is performed until the proportion of hydrogen fluoride in the metal fluoride is 0.001% by mass or more and 0.1% by mass or less.

Note that it is most preferable that the desorption step is performed until hydrogen fluoride is not desorbed from the metal fluoride. The end period of the desorption step can be detected as follows. That is, outlet gas exhausted from an exhaust port of the container filled with the metal fluoride is analyzed by a Fourier transform infrared spectrophotometer, and when the absorption wavelength of 4038 cm$^{-1}$ derived from hydrogen fluoride cannot be detected, the desorption step ends. When the concentration of hydrogen fluoride in the outlet gas exhausted from the exhaust port of the container filled with the metal fluoride is a predetermined amount or less, the heating of the container is stopped, and the container is cooled to room temperature. The metal fluoride cooled to room temperature can be used as a hydrogen fluoride adsorbent.

When each of the adsorption step and the desorption step is performed on the metal fluoride once, the hydrogen fluoride adsorbent can be obtained. However, each of the adsorption step and the desorption step may be repeatedly performed multiple times. That is, after each of the adsorption step and the desorption step is performed once, the same operation may be repeatedly performed. The number of repetitions is not particularly limited. From the viewpoint of improving the adsorption capacity, it is preferable that the adsorption step and the desorption step are repeated two or more times in total, it is more preferable that the adsorption step and the desorption step are repeated three or more times, and it is still more preferable that the adsorption step and the desorption step are repeated four or more times.

[Hydrogen Fluoride Adsorbent]

The metal fluoride on which the treatment including the adsorption step and the desorption step is performed can be used as a hydrogen fluoride adsorbent.

The shape of the hydrogen fluoride adsorbent is not particularly limited, and examples thereof include a columnar shape, a spherical shape, an oval shape, and a plate shape.

The size of the hydrogen fluoride adsorbent is not particularly limited. For example, in a pillar hydrogen fluoride adsorbent, the diameter thereof may be 2 mm or more and 10 mm or less (preferably 1 mm or more and 10 mm or less), and the height may be 2 mm or more and 10 mm or less.

The specific surface area of the hydrogen fluoride adsorbent is preferably 0.01 m$^2$/g or more and 5 m$^2$/g or less, more preferably 0.01 m$^2$/g or more and 4 m$^2$/g or less, and still more preferably 0.01 m$^2$/g or more and 3 m$^2$/g or less. The hydrogen fluoride adsorbent where the specific surface area is in the above-described numerical range has a high adsorption capacity of hydrogen fluoride.

When hydrogen fluoride is adsorbed on the hydrogen fluoride adsorbent, the adsorption performance of hydrogen fluoride decreases. However, when the adsorbed hydrogen fluoride is desorbed, the adsorption performance of hydrogen fluoride can be improved. That is, the hydrogen fluoride adsorbent is regenerated by desorbing hydrogen fluoride, and can be reused. When the hydrogen fluoride adsorbent is repeatedly reused by repeating the adsorption and the desorption of hydrogen fluoride, the adsorption amount of hydrogen fluoride during the use as the hydrogen fluoride adsorbent is preferably 25% by mass or less and more preferably 15% by mass or less with respect to the metal fluoride.

When the same treatment as the desorption step is performed on the hydrogen fluoride adsorbent used for the adsorption of hydrogen fluoride, the hydrogen fluoride adsorbent on which hydrogen fluoride can be adsorbed again can be regenerated. When the adsorption amount of hydrogen fluoride during the use as the hydrogen fluoride adsorbent is 25% by mass or less with respect to the metal fluoride, the adsorption of hydrogen fluoride can be stably performed through the above-described regeneration treatment, and the hydrogen fluoride adsorbent can be repeatedly obtained.

When hydrogen fluoride in the hydrogen fluoride removal target gas is removed using the hydrogen fluoride adsorbent produced with the method for producing a hydrogen fluoride adsorbent according to the present embodiment, the hydrogen fluoride concentration in the hydrogen fluoride removal target gas is preferably 0.5% by volume or more and 60% by volume or less, more preferably 0.5% by volume or more and 20% by volume or less, still more preferably 2% by volume or more and 15% by volume or less, and still more preferably 5% by volume or more and 10% by volume or less.

When the hydrogen fluoride concentration in the hydrogen fluoride removal target gas is 0.5% by volume or more and 60% by volume or less, the period of time required to adsorb hydrogen fluoride on the hydrogen fluoride adsorbent is reduced. In addition, when the hydrogen fluoride concentration in the hydrogen fluoride removal target gas is 0.5% by volume or more and 20% by volume or less, the melting point of the salt (the NaF-HF salt when the metal fluoride is sodium fluoride) formed on the surface of the hydrogen fluoride adsorbent is not excessively low. Accordingly, a phenomenon where the contact portion between the hydrogen fluoride adsorbents melts such that the hydrogen fluoride adsorbents are joined is not likely to occur. Therefore, the passage of gas is not likely to be hindered, and pressure loss of gas is not likely to increase.

Examples

The present invention will be described in more detail by describing Examples and Comparative Examples below.

(Example 1)

A hydrogen fluoride adsorbent was produced using a hydrogen fluoride adsorbent production device illustrated in FIG. 1. First, the hydrogen fluoride adsorbent production device of FIG. 1 will be described. The hydrogen fluoride adsorbent production device includes a portion (upper portion of FIG. 1) that performs the adsorption step and a portion (lower portion of FIG. 1) that performs the desorption step.

The portion that performs the adsorption step includes: a hydrogen fluoride gas supply unit 11 that supplies hydrogen fluoride gas; a dilution gas supply unit 12 that supplies nitrogen gas as the dilution gas; a hydrogen fluoride gas flow rate control device 13 that controls the flow rate of the hydrogen fluoride gas; a dilution gas flow rate control device 14 that controls the flow rate of the dilution gas; a filled cylinder 15 that is filled with a sodium fluoride particulate (not illustrated); a temperature control unit 16 that controls the temperature of the sodium fluoride particulate in the filled cylinder 15; a temperature measurement unit 17 that measures the temperature of the sodium fluoride particulate in the filled cylinder 15; an analysis unit 18 that holds outlet gas passed through the filled cylinder 15 and exhausted from an exhaust port of the filled cylinder 15 to analyze the outlet gas; and a Fourier transform infrared spectrophotometer 19 that performs infrared spectroscopy of the outlet gas in the analysis unit 18.

The above-described respective units in the portion that performs the adsorption step are connected to each other through a pipe as illustrated in FIG. 1. The hydrogen fluoride gas blown from the hydrogen fluoride gas supply unit 11 and the nitrogen gas blown from the dilution gas supply unit 12 are mixed in the pipe in a state where the flow rates thereof are controlled by the hydrogen fluoride gas flow rate control device 13 and the dilution gas flow rate control device 14.

The hydrogen fluoride-containing gas that is the mixed gas of the hydrogen fluoride gas and the nitrogen gas is blown to the filled cylinder 15 through the pipe and is brought into contact with the sodium fluoride particulate such that the hydrogen fluoride in the hydrogen fluoride-containing gas is adsorbed on the sodium fluoride particulate. At this time, the temperature of the sodium fluoride particulate in the filled cylinder 15 is measured by the temperature measurement unit 17 and is controlled by the temperature control unit 16.

The outlet gas output from the filled cylinder 15 is fed to the analysis unit 18 through the pipe, infrared spectroscopy thereof is performed by the Fourier transform infrared spectrophotometer 19, and the concentration of hydrogen fluoride is measured. The outlet gas of which the infrared spectroscopy is performed is exhausted from the analysis unit 18 to the outside of the hydrogen fluoride adsorbent production device through the pipe.

The portion that performs the desorption step includes: a heat treatment atmosphere gas supply unit 21 that supplies nitrogen gas as the heat treatment atmosphere gas; a heat treatment atmosphere gas flow rate control device 22 that controls the flow rate of the heat treatment atmosphere gas; a filled cylinder 23 where the adsorption step is performed and that is filled with the sodium fluoride particulate (not illustrated) on which hydrogen fluoride is adsorbed; a temperature control unit 24 that controls the temperature of the sodium fluoride particulate in the filled cylinder 23; a temperature measurement unit 25 that measures the temperature of the sodium fluoride particulate in the filled cylinder 23; an analysis unit 26 that holds outlet gas passed through the filled cylinder 23 and exhausted from an exhaust port of the filled cylinder 23 to analyze the outlet gas; and a Fourier transform infrared spectrophotometer 27 that performs infrared spectroscopy of the outlet gas in the analysis unit 26.

The above-described respective units in the portion that performs the desorption step are connected to each other through a pipe as illustrated in FIG. 1. The heat treatment atmosphere gas blown from the heat treatment atmosphere gas supply unit 21 is blown to the filled cylinder 23 through the pipe, and the sodium fluoride particulate in the filled cylinder 23 is heated in the heat treatment atmosphere gas. At this time, the temperature of the sodium fluoride particulate in the filled cylinder 23 is measured by the temperature measurement unit 25 and is controlled by the temperature control unit 24.

The outlet gas output from the filled cylinder 23 is fed to the analysis unit 26 through the pipe, infrared spectroscopy thereof is performed by the Fourier transform infrared spectrophotometer 27, and the concentration of hydrogen fluoride is measured. The outlet gas of which the infrared spectroscopy is performed is exhausted from the analysis unit 26 to the outside of the hydrogen fluoride adsorbent production device through the pipe.

Next, the non-treated sodium fluoride particulate on which the treatment including the adsorption step and the desorption step is to be performed will be described. The non-treated sodium fluoride particulate is a sodium fluoride pellet manufactured by Morita Chemical Industries Co., Ltd. and forms a pillar shape having a diameter of 3 mm and a height of 3 mm. The apparent density of one non-treated sodium fluoride pellet is 2.1 g/mL, and the filled bulk density thereof is 1.3 g/mL. In addition, the specific surface area of the sodium fluoride pellet was 0.175 $m^2$/g when measured using a mercury press-in method. Further, the average pore diameter of pores formed on the surface of the sodium fluoride pellet was 1.73 $\mu$m when measured using a mercury press-in method.

Next, the filled cylinder 15 and the filled cylinder 23 filled with the sodium fluoride pellet will be described. The filled cylinder 15 used in the adsorption step and the filled cylinder 23 used in the desorption step are nickel cylindrical members having an inner diameter of 38 mm, an outer diameter of 40 mm, and a length of 300 mm. The filled cylinder 15 and the filled cylinder 23 are provided in the hydrogen fluoride adsorbent production device such that a longitudinal direction of the cylindrical member is along the vertical direction.

The filled cylinder 15 and the filled cylinder 23 are filled with 130 g (volume: 100 mL) of the sodium fluoride pellet, and a nickel mesh is provided in a lower portion of the cylindrical member. By disposing the sodium fluoride pellet on the nickel mesh, the sodium fluoride pellet is prevented from falling from the cylindrical member.

Next, the adsorption step was performed on the non-treated sodium fluoride pellet using the hydrogen fluoride adsorbent production device of FIG. 1. The temperature of the sodium fluoride pellet in the filled cylinder 15 was adjusted to 20°C by the temperature control unit 16. The hydrogen fluoride gas of which the flow rate was adjusted to 39.5 NmL/min by the hydrogen fluoride gas flow rate control device 13 and the nitrogen gas of which the flow rate was adjusted to 398.5 NmL/min by the dilution gas flow rate control device 14 were mixed to produce the hydrogen fluoride-containing gas, and the hydrogen fluoride-containing gas was supplied to the filled cylinder 15 through the pipe.

The hydrogen fluoride concentration in the hydrogen fluoride-containing gas supplied to the filled cylinder 15 was 9.0% by volume, and the SV of hydrogen fluoride was 263 /h. The hydrogen fluoride in the hydrogen fluoride-containing gas was adsorbed on the non-treated sodium fluoride pellet to generate heat of adsorption, and the temperature of the sodium fluoride pellet in the filled cylinder 15 was increased to 40°C.

The entire amount of the outlet gas of the filled cylinder 15 was fed to the analysis unit 18, and was analyzed by the Fourier transform infrared spectrophotometer 19. When the transition of the hydrogen fluoride concentration was traced, a peak (absorption wavelength of 4038 $cm^{-1}$) derived from hydrogen fluoride was detected 30 minutes after starting the supply of the hydrogen fluoride-containing gas. A period of time where the peak derived from hydrogen fluoride was detected a breakthrough time of the non-treated sodium fluoride pellet. The adsorption capacity of the non-treated sodium fluoride pellet was able to be calculated from the amount of hydrogen fluoride on which the non-treated sodium fluoride pellet was adsorbed from the start of supply of the hydrogen fluoride-containing gas to the breakthrough time, and the amount thereof was 8.1 (HF-mg/NaF-g).

Next, the supply of the hydrogen fluoride-containing gas to the filled cylinder 15 was continued, and the supply of the hydrogen fluoride-containing gas was stopped 330 minutes after starting the supply of the hydrogen fluoride-containing gas. The amount of the hydrogen fluoride-containing gas supplied to the filled cylinder 15 was 13 L (11.6 g). In addition, the amount of the hydrogen fluoride on which the non-treated sodium fluoride pellet was not adsorbed was the amount of hydrogen fluoride detected from the outlet gas in a period of 30 minutes to 330 minutes from the start of the supply, which was 0.8 g. Accordingly, the amount of hydrogen fluoride on which the non-treated sodium fluoride pellet was adsorbed was 10.8 g, and thus the proportion of hydrogen fluoride in the sodium fluoride pellet on which hydrogen fluoride was adsorbed was 7.7% by mass.

Next, the desorption step was performed on the sodium fluoride pellet on which the adsorption step was performed using the hydrogen fluoride adsorbent production device of FIG. 1. The desorption step was performed by heating the sodium fluoride pellet in the filled cylinder 15 by the temperature control unit 24 while supplying the heat treatment atmosphere gas from the filled cylinder 15 where the adsorption step was completed to the heat treatment atmosphere gas supply unit 21. The heat treatment atmosphere gas was nitrogen gas, and the flow rate thereof was adjusted to 1467 NmL/min by the heat treatment atmosphere gas flow rate control device 22. In addition, the temperature of the sodium fluoride pellet was 195°C.

The desorption step may be performed by moving the sodium fluoride pellet from the filled cylinder 15 where the adsorption step was completed to the other filled cylinder 23 (the filled cylinder 23 for the desorption step). Therefore, in FIG. 1, the reference numeral of the filled cylinder for the desorption step is represented by 23. In Example 1, the desorption step was performed by using the filled cylinder 15 for the adsorption step as the filled cylinder 23 for the desorption step.

As in the case of the filled cylinder 23, regarding the temperature control unit 24, the temperature measurement unit 25, the analysis unit 26, and the Fourier transform infrared spectrophotometer 27 of FIG. 1, in Example 1, the temperature control unit 16, the temperature measurement unit 17, the analysis unit 18, and the Fourier transform infrared spectrophotometer 19 used in the adsorption step were used as it is to perform the desorption step.

The outlet gas of the filled cylinder 15 was fed to the analysis unit 18 and was analyzed by the Fourier transform infrared spectrophotometer 19, and when the hydrogen fluoride concentration was measured, the concentration was 8.7% by volume at a maximum. Since the flow rate of the heat treatment atmosphere gas was 1467 NmL/min, hydrogen fluoride was evaporated at a rate of about 128 NmL/min which was a rate of 115 mg/min in terms of the mass. Since the mass of the sodium fluoride pellet was 130 g, the evaporation rate of the hydrogen fluoride was 0.88 mg/min per 1 g of the sodium fluoride pellet.

Next, when the supply of the heat treatment atmosphere gas to the filled cylinder 15 was continued, the hydrogen fluoride concentration in the outlet gas gradually decreased. Therefore, the supply of the heat treatment atmosphere gas was continued until hydrogen fluoride was not detected, and the desorption step ended.

By performing each of the adsorption step and the desorption step once as described above, an activation treatment was performed on the sodium fluoride pellet, and the obtained sodium fluoride pellet was set as a hydrogen fluoride adsorbent. The obtained hydrogen fluoride adsorbent formed a pillar shape, and the diameter thereof was 3.1 mm. In addition, the specific surface area of the obtained hydrogen fluoride adsorbent was 1.242 $m^2$/g when measured using a mercury press-in method. In addition, the average pore diameter of pores formed on the surface of the obtained hydrogen fluoride adsorbent was 0.390 μm when measured using a mercury press-in method.

Next, the evaluation of the adsorption performance of the produced hydrogen fluoride adsorbent, that is, the measurement of the adsorption capacity of hydrogen fluoride was performed. This test was performed using the portion (the upper portion of FIG. 1) that performs the adsorption step in the hydrogen fluoride adsorbent production device of FIG. 1. The filled cylinder 15 where the desorption step was completed was cooled such that the temperature of the hydrogen fluoride adsorbent was 20°C. The hydrogen fluoride removal target gas that was gas containing hydrogen fluoride was supplied to the cooled filled cylinder 15, the hydrogen fluoride in the hydrogen fluoride removal target gas was adsorbed on the hydrogen fluoride adsorbent, and the hydrogen fluoride concentration in the hydrogen fluoride removal target gas was decreased.

The hydrogen fluoride removal target gas was mixed gas of fluorine gas and hydrogen fluoride gas. The hydrogen fluoride gas of which the flow rate was adjusted to 39.5 NmL/min by the hydrogen fluoride gas flow rate control device 13 and the fluorine gas having a purity of 100% by volume of which the flow rate was adjusted to 398.5 NmL/min by the dilution gas flow rate control device 14 were mixed to produce the hydrogen fluoride removal target gas, and the hydrogen fluoride removal target gas was supplied to the filled cylinder 15 through the pipe. The hydrogen fluoride concentration in the hydrogen fluoride removal target gas supplied to the filled cylinder 15 was 9.0% by volume, and the SV of hydrogen fluoride was 263 /h.

The entire amount of the outlet gas of the filled cylinder 15 was fed to the analysis unit 18, and was analyzed by the Fourier transform infrared spectrophotometer 19. When the transition of the hydrogen fluoride concentration was traced, a peak (absorption wavelength of 4038 cm$^{-1}$) derived from hydrogen fluoride was detected 240 minutes after starting the supply of the hydrogen fluoride removal target gas. A period of time where the peak derived from hydrogen fluoride was detected a breakthrough time of the hydrogen fluoride adsorbent.

The adsorption capacity of the hydrogen fluoride adsorbent was able to be calculated from the amount of hydrogen fluoride on which the hydrogen fluoride adsorbent was adsorbed from the start of supply of the hydrogen fluoride removal target gas to the breakthrough time, and the amount thereof was 65.1 (HF-mg/NaF-g). The adsorption capacity of the hydrogen fluoride adsorbent according to Example 1 was about 8 times the adsorption capacity of the hydrogen fluoride adsorbent according to Comparative Example 1 below.

After sufficiently replacing the inside of the filled cylinder 15 with nitrogen gas, the hydrogen fluoride adsorbent was taken out from the filled cylinder 15 and was observed by visual inspection. As a result, the external appearance of the hydrogen fluoride adsorbent was not changed as compared to that before coming into contact with the hydrogen fluoride removal target gas. That is, the powdering of the sodium fluoride pellet or the joining of the sodium fluoride pellets did not occur.

Table 1 shows the conditions and the results of the method for producing a hydrogen fluoride adsorbent (the adsorption step and the desorption step), and Table 2 shows the conditions and the results of the evaluation of the adsorption performance of the hydrogen fluoride adsorbent.

[Table 1]

| Unit | Diameter of Non-Treated Sodium Fluoride Pellet | Conditions of Adsorption Step | | | | | | Conditions of Desorption Step | | Number of Times Adsorption Step and Desorption Step Repeated | Results of Adsorption Step | | | | | Results of Desorption Step | | | Diameter of Sodium Fluoride Pellet |
|---|---|---|---|---|---|---|---|---|---|---|---|---|---|---|---|---|---|---|---|
| | | Temperature | Hydrogen Fluoride-Containing Gas | | | | | Temperature | Flow Rate of Heat Treatment Atmosphere Gas | | Supplied Hydrogen Fluoride | Hydrogen Fluoride Not Adsorbed | Hydrogen Fluoride Adsorbed | Breakthrough Time | Adsorption Capacity | Hydrogen Fluoride Concentration in Outlet Gas | Vapor Pressure of Hydrogen Fluoride | Desorption Rate of Hydrogen Fluoride | |
| | | | Hydrogen Fluoride Concentration | SV | Supply Time | Flow Rate of Hydrogen Fluoride | Flow Rate of Nitrogen Gas | | | | | | | | | | | | |
| Unit | mm | °C | % by volume | /h | min | NmL/-min | NmL/-min | °C | NmL/min | Number of Times | L(a) | g | g (% by mass) | min | HF-mg/NaF-g | % by volume | mmHg | HF-mg/min/NaF-g | mm |
| Ex. 1 | 3.0 | 20 | 9.0 | 2-63 | 330 | 39.5 | 398.5 | 195 | 1467 | 1 | 13.0 (11.6) | 0.80 | 10.8 (7.7) | 30 | 8.1 | 8.7 | 66.5 | 0.88 | 3.1 |
| Ex. 2 | 3.0 | 20 | 9.0 | 2-63 | 330 | 39.5 | 398.5 | 195 | 1467 | 1 | 13.0 (11.6) | 0.80 | 10.8 (7.7) | 30 | 8.1 | 8.7 | 66.5 | 0.88 | 3.1 |
| Ex. 3 | 3.0 | 20 | 9.0 | 2-63 | 330 | 39.5 | 398.5 | 195 | 1467 | 2 | 13.0 (11.6) | 0.80 | 10.8 (7.7) | 30 | 8.1 | 8.7 | 66.5 | 0.88 | 3.1 |
| Ex. 4 | 3.0 | 80 | 9.0 | 2-63 | 300 | 39.5 | 398.5 | 195 | 1467 | 9 | 11.9 (106) | 3.71 | 6.9 (5.0) | 5 | 1.4 | 8.7 | 66.5 | 0.88 | 3.4 |
| Ex. 5 | 3.0 | 20 | 9.0 | 2-63 | 330 | 39.5 | 398.5 | 195 | 1467 | 1 | 13.0 (11.6) | 0.80 | 10.8(7.-7) | 30 | 8.1 | 8.7 | 66.5 | 0.88 | 3.1 |
| Ex. 6 | 3.0 | 20 | 18.0 | 2-63 | 170 | 78.8 | 359.2 | 195 | 1467 | 1 | 13.4 (12.0) | 0.90 | 11.1 (7.8) | 18 | 9.7 | 8.7 | 66.5 | 0.88 | 3.1 |
| Ex. 7 | 3.0 | 80 | 9.0 | 2-63 | 300 | 39.5 | 398.5 | 195 | 1467 | 1 | 11.9 (106) | 3.71 | 6.9 (5.0) | 5 | 1.4 | 8.7 | 66.5 | 0.88 | 3.1 |
| Ex. 8 | 3.0 | 20 | 9.0 | 2-63 | 90 | 39.5 | 398.5 | 195 | 1467 | 1 | 3.56 (3.17) | 0.001 | 3.169 (2.38) | 30 | 8.1 | 8.7 | 66.5 | 0.88 | 3.1 |
| Ex. 9 | 3.0 | 20 | 05 | 3-60 | 1200 | 3 | 597 | 195 | 1467 | 1 | 3.60 (3.21) | 0.02 | 3.19 (2.4) | 320 | 6.6 | 8.7 | 66.5 | 0.88 | 3.1 |
| Ex. 10 | 3.0 | 20 | 9.0 | 2-63 | 330 | 39.5 | 398.5 | 195 | 1467 | 4 | 13.0 (11.6) | 0.80 | 10.8 (7.7) | 30 | 8.1 | 8.7 | 66.5 | 0.88 | 3.2 |
| Ex. 11 | 3.0 | 20 | 100 | 1-70 | 1620 | 28.3 | 255 | 195 | 1467 | 1 | 45.8 (40.9) | 4.23 | 36.7 (22.0) | 40 | 7.8 | 8.7 | 66.5 | 0.88 | 3.1 |

(continued)

| Unit | Diameter of Non-Treated Sodium Fluoride Pellet (mm) | Conditions of Adsorption Step Temperature (°C) | Hydrogen Fluoride Concentration (% by volume) | SV (/h) | Supply Time (min) | Flow Rate of Hydrogen Fluoride (NmL/min) | Flow Rate of Nitrogen Gas (NmL/min) | Conditions of Desorption Step Temperature (°C) | Flow Rate of Heat Treatment Atmosphere Gas (NmL/min) | Number of Times Adsorption Step and Desorption Step Repeated (Number of Times) | Supplied Hydrogen Fluoride L(a) | Hydrogen Fluoride Not Adsorbed (g) | Hydrogen Fluoride Adsorbed g (% by mass) | Breakthrough Time (min) | Adsorption Capacity HF-mg/NaF-g | Hydrogen Fluoride Concentration in Outlet Gas (% by volume) | Vapor Pressure of Hydrogen Fluoride (mmHg) | Desorption Rate of Hydrogen Fluoride HF-mg/min/NaF-g | Diameter of Sodium Fluoride Pellet (mm) |
|---|---|---|---|---|---|---|---|---|---|---|---|---|---|---|---|---|---|---|---|
| Ex. 12 | 3.0 | 20 | 9.0 | 2-63 | 330 | 39.5 | 398.5 | 235 | 1467 | 1 | 13.0 (11.6) | 0.80 | 10.8(7.7) | 30 | 8.1 | 41 | 311 | 412 | 3.1 |
| Ex. 13 | 3.0 | 20 | 50.0 | 2-63 | 40 | 219 | 219 | 195 | 1467 | 1 | 8.8(7.8) | 0.90 | 6.9(5.1) | 20 | 30.1 | 8.7 | 66.5 | 0.88 | 3.1 |
| Comp. Ex. 1 | 3.0 | - | - | - | - | - | - | - | - | - | - | - | - | - | - | - | - | - | 3.1 |
| Comp. Ex. 2 | 3.0 | - | - | - | - | - | - | - | - | - | - | - | - | - | - | - | - | - | 3.1 |
| Comp. Ex. 3 | 3.0 | - | - | - | - | - | - | 200 | 1467 | - | - | - | - | - | - | - | - | - | 3.1 |
| Comp. Ex. 4 | 3.0 | 80 | 9.0 | 2-63 | 60 | 39.5 | 398.5 | 195 | 1467 | 1 | 2.37 (2.12) | 0.12 | 200 (1.5) | 5 | 1.4 | 8.7 | 66.5 | 0.88 | 3.1 |
| Comp. Ex. 5 | 3.0 | 20 | 0.1 | 1-20 | 1720 | 0.2 | 199.8 | - | - | - | 0.34 (0.31) | 0 | 0.31 (0.23) | - | - | - | - | - | - |

[Table 2]

| | Treatment of Hydrogen Fluoride Removal Target Gas | | | | | | Evaluation of Hydrogen Fluoride Adsorbent | | | | | |
|---|---|---|---|---|---|---|---|---|---|---|---|---|
| | Temperature | Kind of Hydrogen Fluoride-Containing Gas | Hydrogen Fluoride Concentration | SV | Flow Rate of Hydrogen Fluoride | Flow Rate of Hydrogen Fluoride-Containing Gas | Breakthrough Time | Adsorption Capacity | Powdering | Joining | Specific Surface Area | Average Pore Diameter |
| Unit | °C | - | % by mass | /h | NmL/min | NmL/min | min | HF-mg/NaF-g | - | - | m²/g | μm |
| Ex. 1 | 20 | Fluorine Gas | 9.0 | 263 | 39.5 | 398.5 | 240 | 65.1 | Not Occurred | Not Occurred | 1.242 | 0.390 |
| Ex. 2 | 20 | Fluorine Gas | 9.0 | 263 | 39.5 | 398.5 | 240 | 65.1 | Not Occurred | Not Occurred | 1.242 | 0.390 |
| Ex. 3 | 20 | Fluorine Gas | 9.0 | 263 | 39.5 | 398.5 | 300 | 81.4 | Not Occurred | Not Occurred | 1.242 | 0.390 |
| Ex. 4 | 80 | Fluorine Gas | 9.0 | 263 | 39.5 | 398.5 | 40 | 10.9 | Not Occurred | Not Occurred | 1.643 | 0.297 |
| Ex. 5 | 20 | Chlorine Trifluoride | 9.0 | 263 | 39.5 | 398.5 | 310 | 84.1 | Not Occurred | Not Occurred | 1.242 | 0.390 |
| Ex. 6 | 20 | Fluorine Gas | 18.0 | 263 | 78.8 | 359.2 | 80 | 43.3 | Not Occurred | Not Occurred | - | - |
| Ex. 7 | 80 | Fluorine Gas | 9.0 | 263 | 39.5 | 398.5 | 40 | 10.9 | Not Occurred | Not Occurred | 1.482 | 0.343 |
| Ex. 8 | 20 | Fluorine Gas | 9.0 | 263 | 39.5 | 398.5 | 120 | 32.6 | Not Occurred | Not Occurred | 1.019 | 0.419 |
| Ex. 9 | 20 | Fluorine Gas | 9.0 | 263 | 39.5 | 398.5 | 125 | 33.9 | Not Occurred | Not Occurred | 1.064 | 0.405 |
| Ex. 10 | 20 | Fluorine Gas | 9.0 | 263 | 39.5 | 398.5 | 430 | 117 | Slightly Occurred | Not Occurred | 1.882 | 0.249 |
| Ex. 11 | 20 | Fluorine Gas | 9.0 | 263 | 39.5 | 398.5 | 270 | 73.2 | Not Occurred | Occurred | - | - |
| Ex. 12 | 20 | Fluorine Gas | 9.0 | 263 | 39.5 | 398.5 | 280 | 76.0 | Occurred | Not Occurred | - | - |

| | Treatment of Hydrogen Fluoride Removal Target Gas | | | | | | Evaluation of Hydrogen Fluoride Adsorbent | | | | | |
|---|---|---|---|---|---|---|---|---|---|---|---|---|
| | Temperature | Kind of Hydrogen Fluoride-Containing Gas | Hydrogen Fluoride Concentration | SV | Flow Rate of Hydrogen Fluoride | Flow Rate of Hydrogen Fluoride-Containing Gas | Breakthrough Time | Adsorption Capacity | Powdering | Joining | Specific Surface Area | Average Pore Diameter |
| Unit | °C | - | % by mass | /h | NmL/min | NmL/min | min | HF-mg/NaF-g | - | - | $m^2/g$ | $\mu m$ |
| Ex. 13 | 20 | Fluorine Gas | 9.0 | 263 | 39.5 | 398.5 | 170 | 46.1 | Not Occurred | Occurred | - | - |
| Comp. Ex. 1 | 20 | Fluorine Gas | 9.0 | 263 | 39.5 | 398.5 | 30 | 8.1 | Not Occurred | Not Occurred | - | - |
| Comp. Ex. 2 | 80 | Fluorine Gas | 9.0 | 263 | 39.5 | 398.5 | 5 | 1.4 | Not Occurred | Not Occurred | - | - |
| Comp. Ex. 3 | 20 | Fluorine Gas | 9.0 | 263 | 39.5 | 398.5 | 25 | 6.8 | Not Occurred | Not Occurred | 0.177 | 1.729 |
| Comp. Ex. 4 | 80 | Fluorine Gas | 9.0 | 263 | 39.5 | 398.5 | 15 | 41 | Not Occurred | Not Occurred | 0.302 | 1.612 |
| Comp. Ex. 5 | - | - | - | - | - | - | - | - | - | - | - | - |

EP 4 585 303 A1

(Example 2)

In Example 1, the adsorption step and the desorption step were performed in the same filled cylinder 15. In Example 2, the desorption step was performed in the filled cylinder 23 by moving the sodium fluoride pellet from the filled cylinder 15 where the adsorption step was completed to the other filled cylinder 23 (the filled cylinder 23 for the desorption step). Using the same method as that of Example 1 except for this point, the production of the hydrogen fluoride adsorbent and the evaluation of the adsorption performance were performed. The materials, the shapes, and the dimensions of the filled cylinder 15 and the filled cylinder 23 were all the same.
Table 1 shows the conditions and the results of the method for producing a hydrogen fluoride adsorbent (the adsorption step and the desorption step), and Table 2 shows the conditions and the results of the evaluation of the adsorption performance of the hydrogen fluoride adsorbent.

(Example 3)

In Example 1, the activation treatment of the sodium fluoride pellet was performed by performing each of the adsorption step and the desorption step once. In Example 3, the activation treatment of the sodium fluoride pellet was performed by performing each of the adsorption step and the desorption step twice. Specifically, in Example 3, after performing each of the adsorption step and the desorption step once, each of the adsorption step and the desorption step was performed once again. Using the same method as that of Example 1 except for this point, the production of the hydrogen fluoride adsorbent and the evaluation of the adsorption performance were performed.
Table 1 shows the conditions and the results of the method for producing a hydrogen fluoride adsorbent (the adsorption step and the desorption step), and Table 2 shows the conditions and the results of the evaluation of the adsorption performance of the hydrogen fluoride adsorbent.

(Example 4)

The production of the hydrogen fluoride adsorbent and the evaluation of the adsorption performance were performed using the same method as that of Example 3 except that the number of times each of the adsorption step and the desorption step was repeatedly performed was nine times, that the temperature of the adsorption step was 80°C, and that the temperature of the hydrogen fluoride adsorbent when hydrogen fluoride was adsorbed on the hydrogen fluoride adsorbent in the evaluation of the adsorption performance of the hydrogen fluoride adsorbent was 80°C.
Table 1 shows the conditions and the results of the method for producing a hydrogen fluoride adsorbent (the adsorption step and the desorption step), and Table 2 shows the conditions and the results of the evaluation of the adsorption performance of the hydrogen fluoride adsorbent.

(Example 5)

The production of the hydrogen fluoride adsorbent and the evaluation of the adsorption performance were performed using the same method as that of Example 1, except that the kind of the hydrogen fluoride removal target gas used in the evaluation of the adsorption performance of the hydrogen fluoride adsorbent was chlorine trifluoride containing hydrogen fluoride.
Table 1 shows the conditions and the results of the method for producing a hydrogen fluoride adsorbent (the adsorption step and the desorption step), and Table 2 shows the conditions and the results of the evaluation of the adsorption performance of the hydrogen fluoride adsorbent.

(Example 6)

The production of the hydrogen fluoride adsorbent and the evaluation of the adsorption performance were performed using the same method as that of Example 1, except that the conditions of the adsorption step (the hydrogen fluoride concentration and the supply time of the hydrogen fluoride-containing gas) and the hydrogen fluoride concentration in the hydrogen fluoride removal target gas used in the evaluation of the adsorption performance of the hydrogen fluoride adsorbent were different.
Table 1 shows the conditions and the results of the method for producing a hydrogen fluoride adsorbent (the adsorption step and the desorption step), and Table 2 shows the conditions and the results of the evaluation of the adsorption performance of the hydrogen fluoride adsorbent.

(Example 7)

The adsorption step was performed on the non-treated sodium fluoride pellet using the same method as that of Example 1, except that the temperature of the adsorption step was 80°C and the supply time of the hydrogen fluoride-containing gas was 300 min.

Next, the adsorption treatment of adsorbing hydrogen fluoride on the produced hydrogen fluoride adsorbent was performed using the same method as that of "the evaluation of the adsorption performance of the produced hydrogen fluoride adsorbent" in Example 1, except that the temperature of the hydrogen fluoride adsorbent when hydrogen fluoride was adsorbed on the hydrogen fluoride adsorbent was 80°C.

The entire amount of the outlet gas of the filled cylinder 15 was fed to the analysis unit 18, and was analyzed by the Fourier transform infrared spectrophotometer 19. When the transition of the hydrogen fluoride concentration was traced, a peak (absorption wavelength of 4038 $cm^{-1}$) derived from hydrogen fluoride was detected 40 minutes after starting the supply of the hydrogen fluoride removal target gas. A period of time where the peak derived from hydrogen fluoride was detected a breakthrough time of the hydrogen fluoride adsorbent.

Next, the hydrogen fluoride adsorbent where breakthrough occurred was regenerated by performing the regeneration treatment on the hydrogen fluoride adsorbent on which the above-described adsorption treatment was performed. That is, while supplying nitrogen gas to the filled cylinder 15 at a flow rate of 1467 NmL/min, the hydrogen fluoride adsorbent where breakthrough occurred was heated to 195°C to desorb the adsorbed hydrogen fluoride such that the hydrogen fluoride adsorbent was regenerated.

The outlet gas of the filled cylinder 15 was fed to the analysis unit 18 and was analyzed by the Fourier transform infrared spectrophotometer 19, and when the hydrogen fluoride concentration was measured, the concentration was 8.7% by volume at a maximum. Next, when the supply of nitrogen gas to the filled cylinder 15 was continued, the hydrogen fluoride concentration in the outlet gas gradually decreased. Therefore, the supply of the nitrogen gas was continued until hydrogen fluoride was not detected, and the regeneration treatment of the hydrogen fluoride adsorbent ended.

Further, the same adsorption treatment and the same regeneration treatment as described above were repeatedly performed on the hydrogen fluoride adsorbent regenerated as described above, and the number of times each of the adsorption treatment and the regeneration treatment was performed on the produced hydrogen fluoride adsorbent was 10. As a result, the breakthrough time of the hydrogen fluoride adsorbent was constant at 40 minutes.

In addition, the adsorption capacity of the hydrogen fluoride adsorbent was able to be calculated from the amount of hydrogen fluoride on which the hydrogen fluoride adsorbent was adsorbed from the start of supply of the hydrogen fluoride removal target gas to the breakthrough time, and the amount thereof was 10.9 (HF-mg/NaF-g) .

Once each of the adsorption treatment and the regeneration treatment was performed ten times, after sufficiently replacing the inside of the filled cylinder 15 with nitrogen gas, the hydrogen fluoride adsorbent was taken out from the filled cylinder 15 and was observed by visual inspection. As a result, the external appearance of the hydrogen fluoride adsorbent was not changed as compared to that before coming into contact with the hydrogen fluoride removal target gas. That is, the powdering of the sodium fluoride pellet or the joining of the sodium fluoride pellets did not occur.

Table 1 shows the conditions and the results of the method for producing a hydrogen fluoride adsorbent (the adsorption step and the desorption step), and Table 2 shows the conditions and the results of the evaluation of the adsorption performance of the hydrogen fluoride adsorbent.

(Example 8)

The production of the hydrogen fluoride adsorbent and the evaluation of the adsorption performance were performed using the same procedure as that of Example 1, except that the supply time of the hydrogen fluoride-containing gas was 90 min.

Table 1 shows the conditions and the results of the method for producing a hydrogen fluoride adsorbent (the adsorption step and the desorption step), and Table 2 shows the conditions and the results of the evaluation of the adsorption performance of the hydrogen fluoride adsorbent.

(Example 9)

The production of the hydrogen fluoride adsorbent and the evaluation of the adsorption performance were performed using the same procedure as that of Example 1, except that the conditions of the adsorption step (the hydrogen fluoride concentration, the SV, and the supply time of the hydrogen fluoride-containing gas). That is, in Example 9, the concentration of hydrogen fluoride in the hydrogen fluoride-containing gas used in the adsorption step was 0.5% by volume.

Table 1 shows the conditions and the results of the method for producing a hydrogen fluoride adsorbent (the adsorption step and the desorption step), and Table 2 shows the conditions and the results of the evaluation of the adsorption performance of the hydrogen fluoride adsorbent.

(Example 10)

The production of the hydrogen fluoride adsorbent and the evaluation of the adsorption performance were performed using the same procedure as that of Example 1, except that the number of times each of the adsorption step and the desorption step was repeatedly performed was four times.

Table 1 shows the conditions and the results of the method for producing a hydrogen fluoride adsorbent (the adsorption step and the desorption step), and Table 2 shows the conditions and the results of the evaluation of the adsorption performance of the hydrogen fluoride adsorbent.

That is, as a result of taking out the hydrogen fluoride adsorbent from the filled cylinder 15 and observing the hydrogen fluoride adsorbent by visual inspection, powdering occurred in a part of the hydrogen fluoride adsorbent. When the hydrogen fluoride adsorbent was sieved through a sieve having an aperture of 1 mm, the mass of the powder passed through the sieve was 0.5% by mass with respect to the total amount. Note that the internal pressure of the filled cylinder 15 was not changed, and clogging caused by production of powder did not occur.

(Example 11)

The production of the hydrogen fluoride adsorbent and the evaluation of the adsorption performance were performed using the same procedure as that of Example 1, except the conditions of the adsorption step (the hydrogen fluoride concentration and the like of the hydrogen fluoride-containing gas) were different.

Table 1 shows the conditions and the results of the method for producing a hydrogen fluoride adsorbent (the adsorption step and the desorption step), and Table 2 shows the conditions and the results of the evaluation of the adsorption performance of the hydrogen fluoride adsorbent. The proportion of hydrogen fluoride in the hydrogen fluoride adsorbent on which hydrogen fluoride was adsorbed in the adsorption step was 22.0% by mass. In addition, as a result of taking out the hydrogen fluoride adsorbent from the filled cylinder 15 and observing the hydrogen fluoride adsorbent by visual inspection, joining of the sodium fluoride pellets occurred and a large lump was produced.

(Example 12)

The production of the hydrogen fluoride adsorbent and the evaluation of the adsorption performance were performed using the same procedure as that of Example 1, except that the temperature of the desorption step was 235°C.

Table 1 shows the conditions and the results of the method for producing a hydrogen fluoride adsorbent (the adsorption step and the desorption step), and Table 2 shows the conditions and the results of the evaluation of the adsorption performance of the hydrogen fluoride adsorbent.

That is, as a result of taking out the hydrogen fluoride adsorbent from the filled cylinder 15 and observing the hydrogen fluoride adsorbent by visual inspection, powdering of a part of the hydrogen fluoride adsorbent occurred. When the hydrogen fluoride adsorbent was sieved through a sieve having an aperture of 1 mm, the mass of the powder passed through the sieve was 6% by mass with respect to the total amount.

(Example 13)

The production of the hydrogen fluoride adsorbent and the evaluation of the adsorption performance were performed using the same procedure as that of Example 1, except the conditions of the adsorption step (the hydrogen fluoride concentration and the like of the hydrogen fluoride-containing gas) were different. That is, in Example 13, the concentration of hydrogen fluoride in the hydrogen fluoride-containing gas used in the adsorption step was 50.0% by volume.

Table 1 shows the conditions and the results of the method for producing a hydrogen fluoride adsorbent (the adsorption step and the desorption step), and Table 2 shows the conditions and the results of the evaluation of the adsorption performance of the hydrogen fluoride adsorbent.

That is, as a result of taking out the hydrogen fluoride adsorbent from the filled cylinder 15 and observing the hydrogen fluoride adsorbent by visual inspection, powdering of the sodium fluoride pellet did not occur, but joining of the pellets occurred. Specifically, regarding the sodium fluoride pellet disposed in a portion of the filled cylinder 15 close to the inlet port of the hydrogen fluoride-containing gas (a range of about 1/3 of the length of the filled cylinder 15 in the central axis direction), joining of the sodium fluoride pellets occurred. Regarding a portion of the filled cylinder 15 other than the portion close to the above-described inlet port, joining of the sodium fluoride pellets did not occur.

(Comparative Example 1)

The production of the hydrogen fluoride adsorbent and the evaluation of the adsorption performance were performed using the same procedure as that of Example 1, except that the treatment including the adsorption step and the desorption step was not performed on the non-treated sodium fluoride pellet. That is, the non-treated sodium fluoride pellet on which the adsorption step and the desorption step were not performed was used as a hydrogen fluoride adsorbent.
Table 2 shows the conditions and the results of the evaluation of the adsorption performance of the hydrogen fluoride adsorbent.

(Comparative Example 2)

The production of the hydrogen fluoride adsorbent and the evaluation of the adsorption performance were performed using the same procedure as that of Comparative Example 1 except that the temperature of the hydrogen fluoride adsorbent when hydrogen fluoride was adsorbed on the hydrogen fluoride adsorbent in the evaluation of the adsorption performance of the hydrogen fluoride adsorbent was 80°C.
Table 2 shows the conditions and the results of the evaluation of the adsorption performance of the hydrogen fluoride adsorbent.

(Comparative Example 3)

The production of the hydrogen fluoride adsorbent and the evaluation of the adsorption performance were performed using the same procedure as that of Example 1, except that the adsorption step was not performed and that the temperature of the desorption step was 200°C.
Table 2 shows the conditions and the results of the evaluation of the adsorption performance of the hydrogen fluoride adsorbent.

(Comparative Example 4)

The production of the hydrogen fluoride adsorbent and the evaluation of the adsorption performance were performed using the same procedure as that of Example 1, except the conditions of the adsorption step (the temperature and the supply time of the hydrogen fluoride-containing gas) were different.
Table 1 shows the conditions and the results of the method for producing a hydrogen fluoride adsorbent (the adsorption step and the desorption step), and Table 2 shows the conditions and the results of the evaluation of the adsorption performance of the hydrogen fluoride adsorbent. The proportion of hydrogen fluoride in the hydrogen fluoride adsorbent on which hydrogen fluoride was adsorbed in the adsorption step was 1.5% by mass. In addition, as a result of the evaluation of the adsorption performance, the adsorption capacity of hydrogen fluoride was very high and was about 0.5 times the adsorption capacity of the hydrogen fluoride adsorbent according to Comparative Example 1.

(Comparative Example 5)

The production of the hydrogen fluoride adsorbent was performed using the same procedure as that of Example 1, except that the conditions of the adsorption step (the hydrogen fluoride concentration, the SV, the supply time of the hydrogen fluoride-containing gas) and that the desorption step was not performed. That is, in Comparative Example 5, the concentration of hydrogen fluoride in the hydrogen fluoride-containing gas used in the adsorption step was 0.1% by volume.
Table 1 shows the conditions and the results of the method for producing a hydrogen fluoride adsorbent (adsorption step). The proportion of hydrogen fluoride in the hydrogen fluoride adsorbent on which hydrogen fluoride was adsorbed in the adsorption step was 0.23% by mass.
In addition, when the transition of the hydrogen fluoride concentration was traced using the same method as that of Example 1, the internal pressure of the filled cylinder 15 started to rapidly increase 1720 minutes after starting the supply of the hydrogen fluoride removal target gas, and the gas did not flow out from the outlet of the filled cylinder 15. As a result of sufficiently replacing the inside of the filled cylinder 15 with nitrogen gas and subsequently observing the inside of the filled cylinder 15 by visual inspection, regarding the sodium fluoride pellet disposed in the portion close to the inlet port of the hydrogen fluoride-containing gas, powdering occurred, and joining of the sodium fluoride pellets occurred.
It is considered that, when the hydrogen fluoride concentration in the hydrogen fluoride-containing gas was low, the supply rate of hydrogen fluoride alone decreased, and thus hydrogen fluoride was likely to be adsorbed on the sodium fluoride pellet disposed in the portion of the filled cylinder 15 closest to the inlet port of the hydrogen fluoride-containing gas. As a result, it is considered that, since a large amount of hydrogen fluoride was adsorbed on the sodium fluoride pellet disposed in the portion closest to the inlet port of the hydrogen fluoride-containing gas, powdering or joining occurred, and clogging occurred in the flow channel of the gas.

Reference Signs List

11: hydrogen fluoride gas supply unit
12: dilution gas supply unit
15: filled cylinder
19: Fourier transform infrared spectrophotometer
21: heat treatment atmosphere gas supply unit
23: filled cylinder
27: Fourier transform infrared spectrophotometer

**Claims**

1. A method for producing a hydrogen fluoride adsorbent, the method comprising:

   an adsorption step of bringing hydrogen fluoride-containing gas that contains hydrogen fluoride and dilution gas for diluting the hydrogen fluoride, in which a concentration of the hydrogen fluoride is 0.5% by volume or more and 60% by volume or less into contact with a metal fluoride such that the hydrogen fluoride in the hydrogen fluoride-containing gas is adsorbed on the metal fluoride and a proportion of the hydrogen fluoride in the metal fluoride on which the hydrogen fluoride is adsorbed is 2% by mass or more and 25% by mass or less; and
   a desorption step of heating the metal fluoride on which the hydrogen fluoride is adsorbed in the adsorption step in heat treatment atmosphere gas at a temperature of 240°C or lower such that the adsorbed hydrogen fluoride is desorbed from the metal fluoride.

2. The method for producing a hydrogen fluoride adsorbent according to claim 1, wherein the dilution gas is at least one gas selected from nitrogen gas, oxygen gas, carbon dioxide, helium, argon, methane tetrafluoride, fluorine gas, chlorine monofluoride, chlorine trifluoride, chlorine pentafluoride, bromine trifluoride, bromine pentafluoride, bromine heptafluoride, iodine trifluoride, iodine pentafluoride, iodine heptafluoride, tungsten hexafluoride, silicon tetrafluoride, nitrogen trifluoride, and sulfur tetrafluoride.

3. The method for producing a hydrogen fluoride adsorbent according to claim 1 or 2, wherein the adsorption step is performed at 0°C or higher and 140°C or lower.

4. The method for producing a hydrogen fluoride adsorbent according to claim 1 or 2, wherein the heat treatment atmosphere gas is at least one of nitrogen gas, helium, argon, oxygen gas, and air.

5. The method for producing a hydrogen fluoride adsorbent according to claim 1 or 2, wherein in the desorption step, the adsorbed hydrogen fluoride is desorbed from the metal fluoride on which the hydrogen fluoride is adsorbed while controlling a rate at which the hydrogen fluoride is desorbed from the metal fluoride on which the hydrogen fluoride is adsorbed to be 3 mg/min or slower per 1 g of the metal fluoride.

6. The method for producing a hydrogen fluoride adsorbent according to claim 1 or 2, wherein the metal fluoride on which the hydrogen fluoride is adsorbed in the adsorption step is obtained by tableting and molding powder of sodium fluoride or by tableting and molding powder of sodium hydrogen fluoride, heating tableted and molded product, and causing a reaction of changing the sodium hydrogen fluoride into sodium fluoride to occur along with desorption of hydrogen fluoride.

# FIG. 1

ADSORPTION STEP

11

12

13

14

15

16

17

18

19

EXHAUST

DESORPTION STEP

21

22

23

24

25

26

27

EXHAUST

## INTERNATIONAL SEARCH REPORT

| International application No. |
|---|
| **PCT/JP2023/032671** |

**A.    CLASSIFICATION OF SUBJECT MATTER**

***B01J 20/04***(2006.01)i; ***B01D 53/68***(2006.01)i; ***B01J 2/00***(2006.01)i; ***B01J 20/30***(2006.01)i; ***C01D 3/02***(2006.01)i
FI:    B01J20/04 A; B01J2/00 A; C01D3/02; B01J20/30; B01D53/68 200

According to International Patent Classification (IPC) or to both national classification and IPC

**B.    FIELDS SEARCHED**

Minimum documentation searched (classification system followed by classification symbols)

B01J20/04; B01D53/68; B01J2/00; B01J20/30; C01D3/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2006-282487 A (KANTO DENKA KOGYO CO., LTD.) 19 October 2006 (2006-10-19)<br>entire text, all drawings | 1-6 |
| A | JP 2008-214187 A (KANTO DENKA KOGYO CO., LTD.) 18 September 2008 (2008-09-18)<br>entire text, all drawings | 1-6 |
| A | JP 51-126395 A (PENNWALT CORP.) 04 November 1976 (1976-11-04)<br>entire text | 1-6 |
| A | JP 2011-17077 A (CENTRAL GLASS CO., LTD.) 27 January 2011 (2011-01-27)<br>entire text, all drawings | 1-6 |
| A | CN 107441883 A (GUANGDONG JINGUANG HIGH TECH CO., LTD.) 08 December 2017<br>(2017-12-08)<br>entire text, all drawings | 1-6 |
| A | CN 112551559 A (JIANGXI GANFENG CYCLE TECH. CO., LTD.) 26 March 2021<br>(2021-03-26)<br>entire text, all drawings | 1-6 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 November 2023** | **28 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
|---|
| **PCT/JP2023/032671** |

### C. DOCUMENTS CONSIDERED TO BE RELEVANT

| Category* | Citation of document, with indication, where appropriate, of the relevant passages | Relevant to claim No. |
|---|---|---|
| A | JP 7-2515 A (BRITISH NUCLEAR FUELS PLC) 06 January 1995 (1995-01-06) entire text, all drawings | 1-6 |
| P, A | WO 2022/185879 A1 (SHOWA DENKO K.K.) 09 September 2022 (2022-09-09) entire text, all drawings | 1-6 |
| P, A | WO 2022/185878 A1 (SHOWA DENKO K.K.) 09 September 2022 (2022-09-09) entire text, all drawings | 1-6 |

Form PCT/ISA/210 (second sheet) (January 2015)

## INTERNATIONAL SEARCH REPORT
### Information on patent family members

International application No.

**PCT/JP2023/032671**

| Patent document cited in search report | | | Publication date (day/month/year) | Patent family member(s) | | | Publication date (day/month/year) |
|---|---|---|---|---|---|---|---|
| JP | 2006-282487 | A | 19 October 2006 | (Family: none) | | | |
| JP | 2008-214187 | A | 18 September 2008 | (Family: none) | | | |
| JP | 51-126395 | A | 04 November 1976 | US entire text | 3976447 | A | |
| | | | | GB | 1505918 | A | |
| | | | | DE | 2608169 | A1 | |
| | | | | FR | 2304388 | A | |
| JP | 2011-17077 | A | 27 January 2011 | US entire text, all drawings | 2012/0031752 | A1 | |
| | | | | WO | 2010/143464 | A1 | |
| | | | | EP | 2423354 | A1 | |
| | | | | KR | 10-2011-0133593 | A | |
| | | | | CN | 102803565 | A | |
| CN | 107441883 | A | 08 December 2017 | (Family: none) | | | |
| CN | 112551559 | A | 26 March 2021 | (Family: none) | | | |
| JP | 7-2515 | A | 06 January 1995 | US entire text, all drawings | 5840266 | A | |
| | | | | EP | 608087 | A2 | |
| WO | 2022/185879 | A1 | 09 September 2022 | TW entire text, all drawings | 202300216 | A | |
| WO | 2022/185878 | A1 | 09 September 2022 | TW entire text, all drawings | 202302203 | A | |

Form PCT/ISA/210 (patent family annex) (January 2015)

**REFERENCES CITED IN THE DESCRIPTION**

**Patent documents cited in the description**

- JP 6792158 B

- JP 4843635 B